# EUROPEAN PATENT SPECIFICATION

(11) **EP 4 190 113 B1**
(45) Date of publication and mention of the grant of the patent: **03.06.2026**
(21) Application number: 20956995.3
(22) Date of filing: 13.10.2020
(51) Int. Cl.: H04W 8/22, H04W 72/51

(54) **METHODS, APPARATUSES AND SYSTEMS FOR USER EQUIPMENT CAPABILITY CONFIRMATION ENQUIRY PROCEDURE**
VERFAHREN, VORRICHTUNGEN UND SYSTEME FÜR EIN BENUTZERGERÄTEFÄHIGKEITSBESTÄTIGUNGSABFRAGEVERFAHREN
PROCÉDÉS, APPAREILS ET SYSTÈMES POUR UNE PROCÉDURE DE DEMANDE DE CONFIRMATION DE CAPACITÉ D'ÉQUIPEMENT UTILISATEUR

(43) Date of publication of application: 07.06.2023
(73) Proprietor: ZTE Corporation, Shenzhen, Guangdong 518057 (CN)
(72) Inventor: YANG, Li, Shenzhen, Guangdong 518057 (CN); XIE, Feng, Shenzhen, Guangdong 518057 (CN)
(74) Representative: Vossius & Partner Patentanwälte Rechtsanwälte mbB
(86) International application number: PCT/CN2020/120618
(87) International publication number: WO 2022/077213

(56) References cited:
- CN-A- 102 546 532
- CN-A- 103 220 657
- CN-A- 106 332 315
- US-A1- 2014 162 642
- US-A1- 2017 223 723
- US-A1- 2019 150 031
- US-A1- 2019 230 499
- US-A1- 2020 260 265
- LG ELECTRONICS INC: "Indicating desired configuration for configuration change", vol. RAN WG2, no. Athenes, Greece; 20170213 - 20170217, 20 February 2017 (2017-02-20), XP051237242, Retrieved from the Internet <URL:http://www.3gpp.org/ftp/tsg_ran/WG2_RL2/TSGR2_97/Docs/> [retrieved on 20170220]
- ERICSSON, NOKIA CORPORATION, NOKIA SIEMENS NETWORKS: "Minor issues for UE Capability Enquiry", 3GPP DRAFT; R2-082177 IES FOR UE CAPABILITY ENQUIRY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Kansas City, USA; 20080429, 29 April 2008 (2008-04-29), Mobile Competence Centre ; 650, route des Lucioles ; F-06921 Sophia-Antipolis Cedex ; France , XP050139952
- NTT DOCOMO, INC.: "UE Capability Enquiry in Control Plane CIoT Optimization", 3GPP DRAFT; R3-181169_CONNESTIND, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Athens, Greece; 20180226 - 20180302, 16 February 2018 (2018-02-16), Mobile Competence Centre ; 650, route des Lucioles ; F-06921 Sophia-Antipolis Cedex ; France , XP051401487

## Description

### TECHNICAL FIELD

The disclosure relates generally to wireless communications and, more particularly, to performing a user equipment (UE) capability confirmation enquiry and thereafter configuring communications between the UE and a wireless communications network node (e.g., base station (BS)) based on the results of the enquiry.

### BACKGROUND

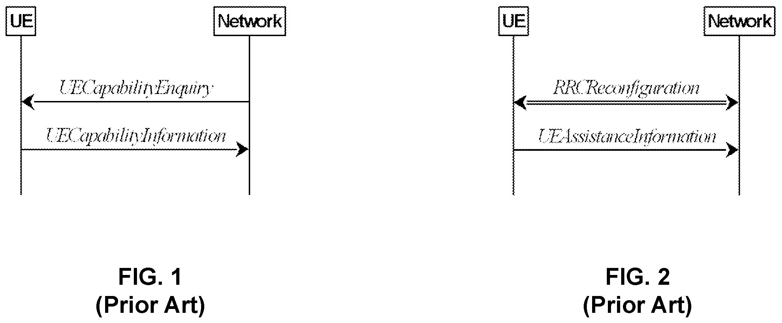

In 3^{rd} Generation Partnership Project (3GPP) cellular systems such as Long Term Evolution (LTE) and New Radio (NR) systems, the network will configure network resources (e.g., time and frequency resources) for communicating with a UE based on the UE's reported capabilities related to various features. As one specific example, a Radio Access Network (RAN) node (e.g., gNB, ng-eNB, etc.) configures the Access Stratum (AS) layer resources based on the UE's reported radio access capability. In order to perform this configuration procedure safely, the network node initiates a "UE Capability Enquiry" procedure, as shown in Figure 1. When the network node (e.g., gNB or ng-eNB) needs UE radio access capability information, the network node sends a *UECapabilityEnquiry* message to the UE when the UE is in a RRC_CONNECTED state. Upon receiving the *UECapabilityEnquiry* message, which can request capability information concerning certain UE features or aspects, the UE will report the corresponding UE capability information for such features or aspects via a *UECapabilityInformation* message. Examples of UE radio access capability information include: "supportedBandCombinationList," "featureSets" and "featureSetCombinations," as known in the art.

Ideally, the UE reported capability information should reflect the real or actual capabilities of the UE, which the network can fully rely on to configure the UE with particular features, so that the features can be implemented or performed with expected behavior and performance characteristics. However, in reality, for a particular air interface relevant feature, even if UE has reported its corresponding capability (e.g., supported or not supported, and any further capability details) to the network node, e.g., a base station, the UE may not work or behave as expected after the network configures UE communications with such feature at a later time. Conventionally, once the capability of a UE is set and reported, the UE's hardware coding is fixed, so the UE cannot change its capability coding from "YES" to "No," for example.

Besides the above-described "UE Capability Enquiry" procedure, the UE can also report UE assistance information via a "UE Assistance Information" procedure after being enabled by the network via a Radio Resource Control (RRC) Reconfiguration procedure, as shown in Figure 2. Conventionally, the purpose of this procedure is for the UE to inform the network of various types of information. As shown in Figure 2, the UE Assistance Information procedure is enabled or activated by the RRC Reconfiguration procedure. The network node can enable the UE to send UE Assistance Information in the *RRCReconfiguration* message sent to the UE. Upon receiving the *RRCReconfiguration* message, the UE replies with a *RRCReconfiguration Complete* message. After being thus enabled, the UE can initiate and report the *UEAssistanceInformation* message at any later time, which can then be used by the network to configure future communications with the UE.

However, currently, the "UE Assistance Information" procedure is not used to report UE capability information or any changes concerning UE capabilities. Rather, the "UE Assistance Information" procedure is used only to report some AS configuration constraints or UE local desires that the network should take into account while configuring communications for the UE. Additionally, the UE can locally change its coding in accordance with the assistance information pursuant to the UE's needs or features.

As discussed above, for a particular air interface relevant feature, even if the UE has reported its corresponding feature capability (e.g., supported or not supported, and any capability details) to the network node, e.g., a base station, the UE may not work or behave as expected when the network configures network resources to support such UE feature at a later time. Currently, the network cannot identify and debug the root cause of such performance degradation and deterioration with a particular feature, which may be due to some defect and/or flaw associated with a change in the UE's capabilities relevant to the feature. For example, some capability details of the UE may not be fully compliant with the latest 3GPP standard version, or the natural aging of the UE or hardware damage to the UE may lead to deteriorated feature performance and "fake capabilities" of the UE. As used herein, the term "fake capability" refers to a capability X that is supposed to be supported by a UE ideally, as reported by the UE with the conventional "UE Capability Enquiry" procedure, but actually is not supported or only partially supported by the UE in practical operation in the field.

In current networks and mechanisms, the network cannot identify or know whether a UE has a defect of flaw due to various practical reasons. Thus, the network cannot take proper and adaptive measures to address the harmful issue of fake capabilities of the UE. This prevents current networks from taking all possible "UE capability constraints" into account when configuring network resources for fully functional UE's while also configuring network resources for defective or flawed UE's having fake capabilities within safe parameter ranges, etc. US 2019/150031 A1 and US 2019/230499 A1 are related prior art.

### SUMMARY

The invention is specified by the independent claims. Preferred embodiments are defined in the dependent claims. In the following description, although numerous features may be designated as optional, it is nevertheless acknowledged that all features comprised in the independent claims are not to be read as optional. The exemplary embodiments disclosed herein are directed to solving the issues relating to one or more of the problems presented in the prior art, as well as providing additional features that will become readily apparent by reference to the following detailed description when taken in conjunction with the accompany drawings.

### BRIEF DESCRIPTION OF THE DRAWINGS

Various exemplary embodiments of the present disclosure are described in detail below with reference to the following Figures. The drawings are provided for purposes of illustration only and merely depict exemplary embodiments of the present disclosure to facilitate the reader's understanding of the present disclosure. Therefore, the drawings should not be considered limiting of the breadth, scope, or applicability of the present disclosure. It should be noted that for clarity and ease of illustration these drawings are not necessarily drawn to scale.
FIG. 1 illustrates a signaling diagram of a conventional UE Capability Enquiry procedure.
FIG. 2 illustrates a signaling diagram of a conventional UE Assistance Information procedure.
FIG. 3 illustrates a block diagram of an exemplary communication network in which techniques disclosed herein may be implemented, in accordance with some embodiments of the present disclosure.
FIG. 4 illustrates a flowchart of a method performed by a wireless communication node, in accordance with some embodiments of the present disclosure.
FIG. 5 illustrates a flowchart of a method performed by a wireless communication device, in accordance with some embodiments of the present disclosure.
FIG. 6 illustrates a signaling diagram of a UE Capability Confirmation Enquiry procedure, in accordance with some embodiments of the present disclosure.
FIG. 7 illustrates a signaling diagram of an enhanced UE Capability Enquiry procedure, in accordance with some embodiments of the present disclosure.
FIG. 8 illustrates a signaling diagram of an enhanced UE Assistance Information procedure, in accordance with some embodiments of the present disclosure.
FIG. 9 illustrates a block diagram of a network node configured to carry out the methods and techniques disclosed in the present disclosure, in accordance with some embodiments.

### DETAILED DESCRIPTION OF EXEMPLARY EMBODIMENTS

Various exemplary embodiments of the present disclosure are described below with reference to the accompanying figures to enable a person of ordinary skill in the art to make and use the present disclosure. As would be apparent to those of ordinary skill in the art, after reading the present disclosure, various changes or modifications to the examples described herein can be made without departing from the scope of the present disclosure. Thus, the present disclosure is not limited to the exemplary embodiments and applications described and illustrated herein. Additionally, the specific order and/or hierarchy of steps in the methods disclosed herein are merely exemplary approaches. Based upon design preferences, the specific order or hierarchy of steps of the disclosed methods or processes can be re-arranged while remaining within the scope of the present disclosure. Thus, those of ordinary skill in the art will understand that the methods and techniques disclosed herein present various steps or acts in a sample order, and the present disclosure is not limited to the specific order or hierarchy presented unless expressly stated otherwise.

A typical wireless communication network includes at least one base station (BS) that provides geographical radio coverage, and at least one wireless user equipment device (UE) that can transmit and receive data within the radio coverage area. In the wireless communication network, a BS and a UE can communicate with each other via a communication link, e.g., via a downlink radio frame from the BS to the UE and via an uplink radio frame from the UE to the BS.

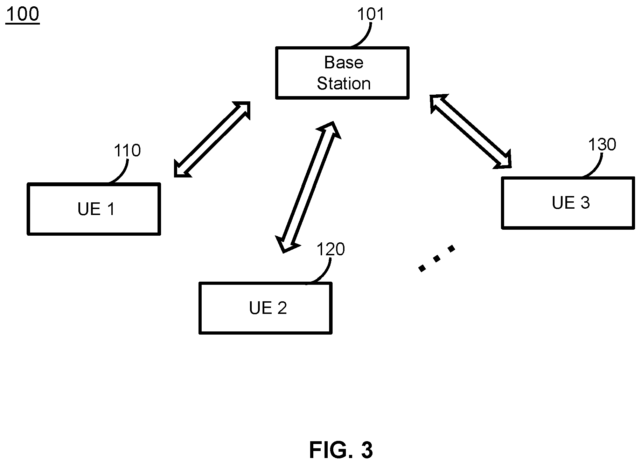

Figure 3 illustrates an exemplary communication network 100 in which techniques disclosed herein may be implemented, in accordance with an embodiment of the present disclosure. As shown in FIG. 1, the exemplary communication network 100 includes a base station (BS) 101 and a plurality of UEs, UE 1 110, UE 2 120 ... UE 3 130, where the BS 101 can communicate with the UEs according to wireless protocols. A UE may move into the coverage of the BS 101 and intends to communicate with the BS 101. To communicate with the BS 101, the UE first performs an initial access to the BS 101, e.g. following a random access procedure.

As discussed herein, a "wireless communication node" can include, or be implemented as, base station (BS), a next Generation Node B (gNB), an E-UTRAN Node B (eNB), a Transmission Reception Point (TRP), an Access Point (AP), a donor node (DN), a relay node, a core network (CN) node, a RAN node, a master node, a secondary node, a distributed unit (DU), a centralized unit (CU), etc., in accordance with the customary understanding of these terms in the art. Furthermore, as discussed herein, a "wireless communication device" can include, or be implemented as, a user equipment device (UE), a station (STA), a mobile terminal (MT), mobile station (MS), etc., in accordance with the customary understanding of these terms in the art. In the description of exemplary embodiments below, a "base station" or "BS" is described as an exemplary embodiment of a "wireless communication node" and a "user equipment device" or "UE" is described as an exemplary embodiment of a "wireless communication device." It should be understood, however, that the scope of the present disclosure is not limited to these exemplary embodiments.

In accordance with various embodiments, the BS 101 and UEs 110, 120 and 130 may each be equipped with multiple antennas (e.g., an antenna array) configured to provide a multiple-input multiple output (MIMO) communication capabilities. In alternative embodiments, the BS 101 and UEs 110, 120 and 130 may each be equipped with a phased array antenna capable of forming one or more beams of radio waves that can be electronically steered. Although only a single BS 101 and only three UEs 110, 120 and 130 are shown in Figure 1, it is understood that additional BSs and additional UEs can be present in the wireless network to implement the method and techniques described herein, in accordance with various embodiments of the disclosure. In accordance with various embodiments, the BS 101 and UEs 110, 120 and 130 may each utilize any precoding schemes to form transmission beams for downlink and uplink transmissions, respectively.

In some embodiments, the BS 101 and UEs 110, 120 and 130 may rely on estimated reference signal (RS) path loss, which describes channel properties of the radio frequency (RF) links between a transmitter and a receiver, to form data transmission beams, respectively. Furthermore, RSs (e.g., CSI-RS) may represent the propagation state of a communication link from a transmitter to a receiver such as the aggregate effect of scattering, fading, and power decay with distance, for example. In general, a receiver can estimate the path loss by tracking a predefined signal (such as reference signal, training signal or pilot signal) in the received wireless frame. Thus, path loss RS tracking makes it possible to adapt transmissions and configuration of network resources in accordance with channel conditions so that a higher network throughput and spectrum efficiency can be achieved in MIMO systems, for example.

However, as discussed above, sometimes a UE will not function properly or fully support a previously reported capability such as a bandwidth capability, for example. Such defect or flaw of the UE may be due to the UE's capability details not being fully compliant with the latest 3GPP standard version, for example. Alternatively, due to normal "wear and tear," the UE may become damaged or worn (e.g., some hardware component impaired) and exhibit deteriorated feature performance concerning a reported capability, which results in a "fake capability" of the UE.

Various exemplary embodiments of the present disclosure will now be described in detail hereinafter. It should be noted that the features of the embodiments and examples in the present disclosure may be combined with each other in any manner without conflict.

To address the problem of UE fake capabilities, in some embodiments, the BS 101 and any one or more of the UEs 110, 120 and 130 can implement an enhanced version of the "UE Capability Enquiry" procedure known in the art. As used herein, "enhanced UE Capability Enquiry procedure" refers to an enhancement of the current UE Capability Enquiry procedure, which includes new and additional signaling and/or information to implement the UE capability confirmation methods and techniques disclosed herein, and described in further detail below. Additionally, as used herein, "enhanced *UECapabilityEnquiry* message" refers to an enhanced version of the conventional *UECapabilityEnquiry* message, which includes new information to implement the UE capability confirmation methods and techniques disclosed herein, and described in further detail below. Similarly, as used herein, "enhanced *UECapabilityInformation* message" refers to an enhanced version of the conventional *UECapabilityInformation* message, which includes new information to implement the UE capability confirmation methods and techniques disclosed herein, and described in further detail below.

In some embodiments, the BS 101 and any one or more of the UEs 110, 120 and 130 can implement an enhanced version of the "UE Assistance Information" procedure known in the art. As used herein, "enhanced UE Assistance Information procedure" refers to an enhancement of the current UE Assistance Information procedure, which includes new and additional signaling and/or information to implement the UE capability confirmation methods and techniques disclosed herein, and described in further detail below. Additionally, as used herein, "enhanced *RRCReconfiguration* message" refers to an enhanced version of the conventional *RRCReconfiguration* message, which includes new information to implement the UE capability confirmation methods and techniques disclosed herein, and described in further detail below. Similarly, as used herein, "enhanced *UEAssistanceInformation* message" refers to an enhanced version of the conventional *UEAssistancelnformation* message, which includes new information to implement the UE capability confirmation methods and techniques disclosed herein, and described in further detail below.

In alternative embodiments, the BS 101 and any one or more of the UEs 110, 120 and 130 can implement a new Radio Resource Control (RRC) procedure referred to herein as a "UE Capability Confirmation Enquiry" procedure. In this new procedure, new signaling and/or information is introduced to implement the UE capability confirmation methods and techniques disclosed herein, and described in further detail below.

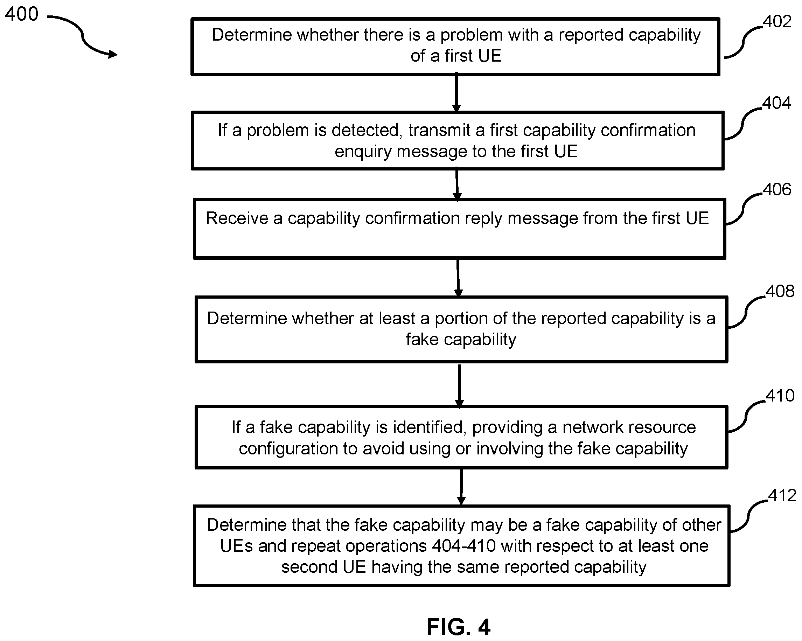

Figure 4 illustrates a flowchart of a method according to claimed invention performed by a Radio Access Network (RAN) node (e.g., a BS) to confirm a reported capability of a first UE, in accordance with some embodiments. At operation 402, the BS may determine or detect that there is a problem with a reported capability of the first UE. In some embodiments, the BS evaluates a possible fake capability utilizing an upper layer protocol entity (e.g., MAC, RLC, PDCP, SDAP, RRC or RRM layer) by analyzing historical communication performance records involving such fake capability. If a possible fake capability is detected, then the BS will send an enquiry to the UE about the possible fake capability, as discussed in further detail below. In some embodiments, the BS can detect or determine one or more performance metrics such as a user data transfer throughput, a packet error rate, a radio link failure, etc., based on one or more communication experiences with the UE. Upon determining that one or more performance metrics are not within a range of expected values associated with a reported capability, the BS can determine that the UE has a possible fake capability associated with the reported capability. For example, if the UE has a fake capability associated with a reported BWP usage constraint, or with a reported TB size limitation, or with a reported maximum BW usage constraint, for example, scheduling and data transmissions, packet data unit (PDU) formation, etc. may be adversely impacted. Thus, if the BS detects that a user data throughput is lower than expected, or a packet error rate is higher than expected, or a radio link failure occurs unusually, the BS can determine that a fake capability exists.

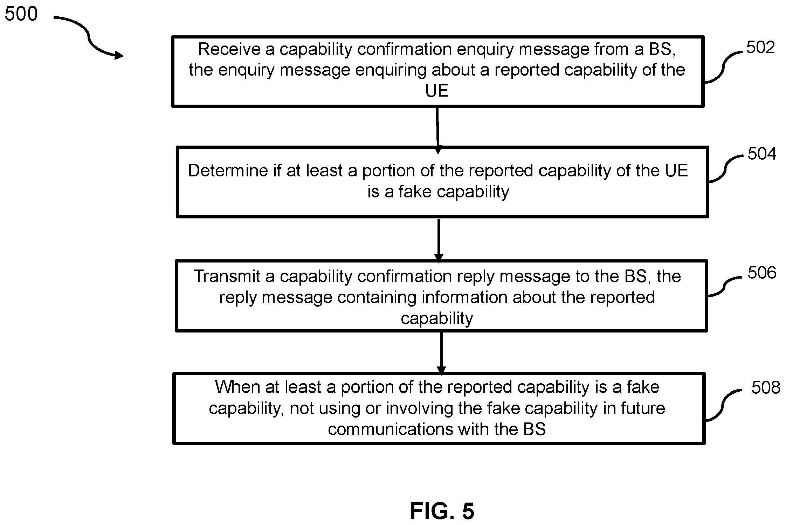

Next, at operation 404, if a possible problem with the reported capability of the UE is detected, the BS transmits a first capability confirmation enquiry message to the UE. In some embodiments, the first capability confirmation enquiry message contains information about a reported capability (e.g., a BWP usage constraint, a TB size limitation, a Max BW usage constraint, etc.) and information indicative of a potential problem with the reported capability (e.g., transmission failure or high error rate when using a certain BWP, TB size or BW), which triggers the UE to perform a local analysis and self test to determine whether it still fully supports the reported capability, as described in further detail below with respect to Figure 5.

Next, at operation 406, the BS receives a capability confirmation reply message from the UE, which contains information about the reported capability. In some embodiments, the information contains the results of the local analysis/self test performed by the UE, which informs the BS whether at least a portion of the reported capability is a fake capability of the UE (i.e., the UE no longer supports or is incapable of performing at least a portion of the reported capability).

Next, at operation 408, the BS will determine whether there at least a portion of the reported capability is a fake capability based on the information contained in the capability confirmation reply message.

Next, at operation 410, if a fake capability is identified at operation 408, the BS will provide a network resource configuration that will avoid using or involving the fake capability for future communications with the first UE. In some embodiments, the BS provides a network resource configuration or reconfiguration by utilizing the RRC Reconfiguration procedure, as known in the art.

Next, at operation 412, the BS will determine that the fake capability of the UE may be a fake capability of other UEs in the field. Thus, in some embodiments, operation 402 can be omitted, and operations 404-410 are repeated for one or more second UEs having the same reported capability as the first UE.

Figure 5 illustrates a flowchart of a method according to claimed invention and performed by a UE to confirm a reported capability of the UE. At operation 502, the UE receives a capability confirmation enquiry message from a BS, the enquiry message enquiring about the reported capability of the UE. In some embodiments, the capability confirmation enquiry message contains information about a reported capability (e.g., a BWP usage constraint, a TB size limitation, a Max BW usage constraint, etc.) and information indicative of a potential problem with the reported capability (e.g., transmission failure or high error rate when using a certain BWP, TB size or BW).

Next, a operation 504, the UE performs a local analysis and/or self test to determine if at least a portion of the reported capability is a fake capability. In some embodiments, the UE locally analyzes and evaluates the concerned fake capability with an upper layer protocol entity that analyzes communication history and performance records involving such fake capability. Based on such analysis, then UE will report the results, as discussed in further detail below. In some embodiments, the UE performs a local analysis/self test by detecting or determining one or more performance metrics such as a user data transfer throughput, a packet error rate, a radio link failure, etc., based on one or more communication experiences with the BS, utilizing conventional methods. Upon determining that one or more performance metrics are not within a range of expected values associated with a reported capability, the UE can determine that it has a possible fake capability associated with a reported capability. For example, if the UE has a fake capability associated with a reported BWP usage constraint, or with a reported TB size limitation, or with a reported maximum BW usage constraint, for example, scheduling and data transmissions, packet data unit (PDU) formation, etc. may be adversely impacted. Thus, if the UE detects that a user data throughput is lower than expected, or a packet error rate is higher than expected or a radio link failure occurs unusually, the UE can determine that a fake capability exists.

Next, at operation 506, the UE transmits a capability confirmation reply message to the BS, the reply message containing information about the reported capability. In some embodiments, the capability confirmation reply message contains information about local analysis and/or self test results, which enable the BS to determine whether some or all portions of the reported capability is now a fake capability.

Next, at operation 508, when at least a portion of the reported capability is a fake capability, future communications with the BS do not use or involve the fake capability. In some embodiments, the UE ...

As described above, a novel method of identifying a fake capability of one or more UEs is disclosed herein. After identifying such fake capability, network resources can be configured to avoid using or involving such fake capability in future communications between the one or more UEs and other network nodes (e.g., BSs).

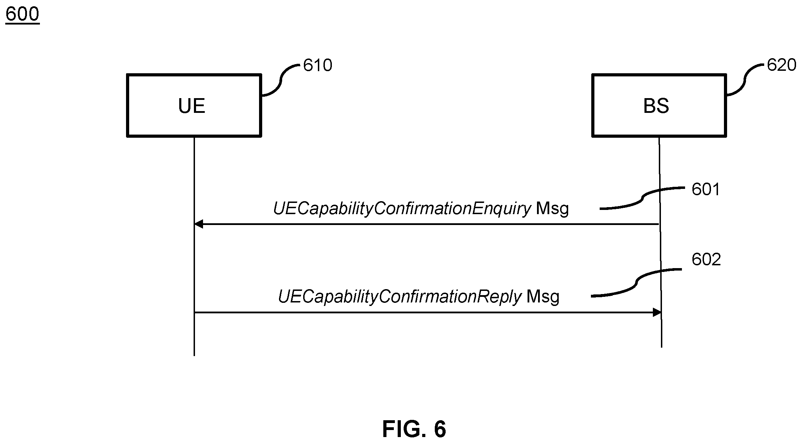

Figure 6 illustrates a signaling diagram between a UE 610 and BS 620 for performing a method of UE capability confirmation, in accordance with some embodiments of the invention. This signaling can be entirely new signaling that is integrated into a protocol for establishing a radio interface between UEs and a RAN, e.g., the RRC protocol. As shown in Figure 6, the BS 620 transmits to the UE 610 a completely new *UECapabilityConfirmationEnquiry* message 601 that contains information that will trigger the UE 610 to conduct a local analysis and/or self test to determine whether the UE 610 has a fake capability, as described above. In some embodiments, the new *UECapabilityConfirmationEnquiry* message 601 includes a new information element (IE) which identifies the reported capability of the UE (e.g., BWP Usage Constraint with RACH BWP, TB size constraint, Max BW usage constraint, and any related information, etc.), which activates/enables new UE Capability Confirmation procedure in which the UE will investigate and report whether at least a portion of the reported capability is a fake capability. In some embodiments, the new *UECapabilityConfirmationEnquiry* message 601 can be implemented as the "first capability confirmation enquiry message" discussed above with respect to Figures 4 and 5. After the UE 610 performs the local analysis/self test, the UE 610 will send a new *UECapabilityConfirmationReply* message 602 to the BS 620, which can be implemented as the "UE capability confirmation reply message" discussed above in connection with Figures 4 and 5. In some embodiments, the new *UECapabilityConfirmationReply* message 602 contains information that indicates to the BS 620 whether or not at least a portion of the reported capability of the UE 610 is a fake capability.

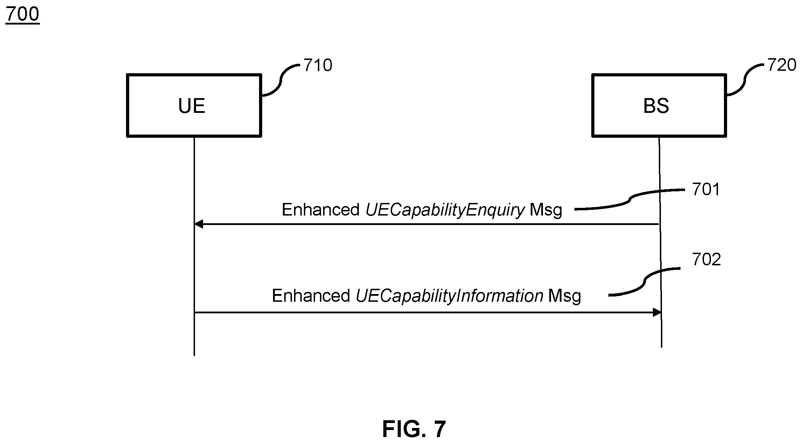

Figure 7 illustrates a signaling diagram between a UE 710 and BS 720 for performing a method of UE capability confirmation, in accordance with alternative embodiments of the invention. In Figure 7, the signaling utilizes enhanced versions of existing signaling utilized in the RRC protocol. As shown in Figure 7, the BS 720 transmits to the UE 710 an enhanced *UECapabilityEnquiry* message 701, which can be the same as a conventional *UECapabilityEnquiry* message, except it is enhanced to contain additional information that will trigger a UE 710 to conduct a local analysis and/or self test to determine whether the UE 710 has a fake capability, as described above. In some embodiments, the enhanced *UECapabilityEnquiry* message 701 includes a new IE which identifies the reported capability of the UE (e.g., BWP Usage Constraint with RACH BWP, TB size constraint, Max BW usage constraint, and any related information, etc.), which activates/enables an enhanced UE Capability Information procedure in which the UE will investigate and report whether at least a portion of the reported capability is a fake capability. In some embodiments, the enhanced *UECapabilityEnquiry* message 701 can be implemented as the "first capability confirmation enquiry message" discussed above with respect to Figures 4 and 5. After the UE 710 performs the local analysis/self test, the UE 710 will send an enhanced *UECapabilityInformation* message 702 to the BS 720, which can be implemented as the "UE capability confirmation reply message" discussed above in connection with Figures 4 and 5. In some embodiments, the enhanced *UECapabilityInformation* message is the same as a conventional *UECapabilityInformation* message, except it is enhanced to include additional information that will enable the BS 720 to determine whether at least a portion of the reported capability of the UE 710 is a fake capability. In some embodiments, the additional information indicates to the BS 720 whether or not at least a portion of the reported capability of the UE 710 is a fake capability.

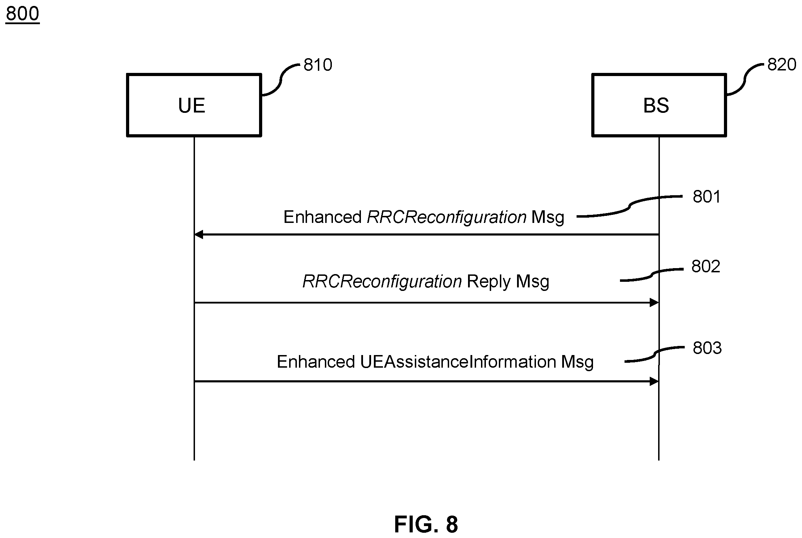

Figure 8 illustrates a signaling diagram between a UE 810 and BS 820 for performing a method of UE capability confirmation, in accordance with further embodiments of the invention. In Figure 8, the signaling utilizes enhanced versions of existing signaling utilized in the RRC protocol. As shown in Figure 8, the BS transmits to the UE an enhanced *RRCReconfiguration* message 801, which can be the same as a conventional *RRCReconfiguration* message 801, except it is enhanced to contain additional information that will trigger and/or enable the UE to conduct a local analysis and/or self test to determine whether the UE has a fake capability, as described above. In some embodiments, the UE is enabled to conduct the local analysis and/or self test at any later time that it detects a potential problem, as discussed in further detail below.

In some embodiments, the BS 820 detects a problem with a reported capability of the UE 810 and then transmits the enhanced *RRCReconfiguration* message 801 to the UE 810 to enquire about the problem before performing user data transfer with the UE 810. In some embodiments, the enhanced *RRCReconfiguration* message 801 includes a new IE, which identifies the reported capability of the UE (e.g., BWP Usage Constraint with RACH BWP, TB size constraint, Max BW usage constraint, and any related information, etc.), which activates/enables an enhanced UE Assistance Information procedure in which the UE will investigate and report whether at least a portion of the reported capability is a fake capability.

In some embodiments, the enhanced *RRCReconfiguration* message 801 simply enables the UE 810 to detect and report a fake capability at any time in the future that it deems necessary or desirable to do so. In some embodiments, the enhanced *UECapabilityEnquiry* message can be implemented as the "first capability confirmation enquiry message" discussed above with respect to Figures 4 and 5. In some embodiments, if the enhanced *RRCReconfiguration* message 801 simply enables the UE 810 to initiate detecting and reporting a fake capability at any time in the future, then operation 402 of Figure 4 can be omitted and the "first capability confirmation enquiry message" is merely an enabling message that enables the UE to perform local analysis and reporting of the analysis results on its own initiative.

After receiving the enhanced *RRCReconfiguration* message 801, the UE 810 transmits an *RRCReconfiguration* reply message 802 indicating that the enhanced RRC Reconfiguration procedure is complete. In some embodiments, the *RRCReconfiguration* reply message 802 may be the same as a conventional *RRCReconfigurationComplete* message, as known in the art. Immediately after transmitting the *RRCReconfiguration* reply message 802, or at any later time when the UE detects a possible problem, the UE can perform a local analysis and/or self test to determine if it has one or more fake capabilities. After the UE performs the local analysis/self test, the UE will actively initiate and send an enhanced *UEAssistanceInformation* message 803 to the BS 820, which can be implemented as the "UE capability confirmation reply message" discussed above in connection with Figures 4 and 5. In some embodiments, the enhanced *UEAssistanceInformation* message 803 is the same as a conventional *UEAssistanceInformation* message, except it is enhanced to include additional information that will enable the BS to determine whether at least a portion of the reported capability of the UE is a fake capability. In some embodiments, the additional information indicates that the UE still fully supports the reported capability or that some or all portions of the reported capability is a fake capability.

Various exemplary scenarios in which the invention can be practiced, in accordance with various embodiments, are described below.

### Example Scenario 1:

In one embodiment, a UE performs initial access (e.g., a random access channel (RACH) procedure), in a certain 20MHz bandwidth (BWP) in a cell in which it is currently camped and establishes its radio link with the network successfully. However, at a later time, when the BS schedules and transmits/receives user data utilizing the certain 20MHz BWP for the RACH, the UE cannot receive or transmit any user data correctly. On the other hand, when the BS schedules and transmits and/or receives user data in a different BWP (e.g., 40/60/80 MHz) of the same cell, which may overlap with above the original 20 MHz BWP, the UE can receive or transmit user data correctly. Based on a series of failure experiences with user data transfers, both the BS and the UE can analyze and determine that such UE may have a "fake capability" within at least a portion of its reported BWP usage constraint. In this way, the BS can perform step 402 of Figure 4, as discussed above, and the UE can perform step 504 of Figure 5, as discussed. In some embodiments, after one or more of the methods and techniques described above with respect to Figures 4-8 are performed, the BS will provide a network resource configuration to avoid using or involving the fake capability in future communications between the BS and the UE. Thereafter, the BS may determine that such "fake capability" may also exist with other UE's operating in the field. Therefore, in some embodiments, the BS may provide the same network resource configuration for the other UEs, e.g., avoid using the same 20 MHz BWP with RACH procedure for data transfer. In some embodiments, the BS will implement steps 404-410 of Figure 4 with the other UEs to determine if they have the same or similar fake capability.

### Example Scenario 2:

In another embodiment, the UE has established a radio link with the BS successfully. However, at a later time, when the BS schedules the transmission/reception of user data with a certain transport block (TB) size, the user data transfer fails. On the other hand, when the BS schedules transfers of user data with other TB sizes, the user data transfer are successful. Based on series of failure experiences with user data transfer, both the BS and UE can analyze and determine that such UE may have the "fake capability" within its reported TB size capability. In this way, the BS can perform step 402 of Figure 4 and the UE can perform step 504 of Figure 5. In some embodiments, after one or more of the methods and techniques described above with respect to Figures 4-8 are performed, the BS will provide a network resource configuration to avoid using or involving the fake capability in future communications between the BS and the UE. Thereafter, the BS may determine that such "fake capability" may also exist with other UE's operating in the field. Therefore, in some embodiments, the BS may provide the same network resource configuration for the other UEs, e.g., avoid using the same TB sizes for data transfer. In some embodiments, the BS will implement steps 404-410 of Figure 4 with the other UEs to determine if they have the same or similar fake capability.

### Example Scenario 3:

In a further embodiment, the UE has established a radio link with the BS successfully. However, at a later time, when the BS schedules the transmission/reception of user data within a certain bandwidth e.g. 2500 - 2700 MHz as reported to be supported by UE, the user data transfer is unsuccessful. On the other hand, when the BS schedules transfers of user data within part of the above bandwidth, e.g. 2540 - 2660 MHz, the user data transfer are successful. Based on series of failure experiences with user data transfer, both the BS and UE can analyze and determine that such UE may have the "fake capability" within its reported Max BW capability constraint. In this way, the BS can perform step 402 of Figure 4 and the UE can perform step 504 of Figure 5. In some embodiments, after one or more of the methods and techniques described above with respect to Figures 4-8 are performed, the BS will provide a network resource configuration to avoid using or involving the fake capability in future communications between the BS and the UE (e.g., avoid using a BW outside of 2540 - 2660 MHz BW). Thereafter, the BS may determine that such "fake capability" may also exist with other UE's operating in the field. Therefore, in some embodiments, the BS may provide the same network resource configuration for the other UEs, e.g., avoid using a BW outside of 2540 - 2660 MHz BW. In some embodiments, the BS will implement steps 404-410 of Figure 4 with the other UEs to determine if they have the same or similar fake capability.

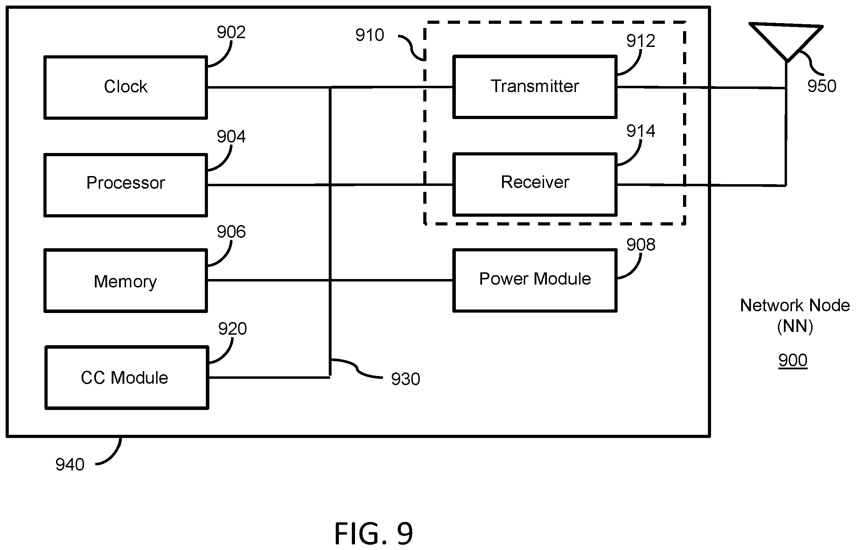

Figure 9 illustrates a block diagram of a network node (NN) 900, in accordance with various embodiments of the disclosure. The NN 900 is an example of a wireless communication device or wireless communication node that can be configured to implement the various methods described herein. In some embodiments, the NN 900 may be wireless communication node such as a base station (BS), as described herein. In other embodiments, the NN 900 may be a wireless communication device such as a user equipment device (UE), as described herein. As shown in Figure 9, the NN 900 includes a housing 940 containing a system clock 902, a processor 904, a memory 906, a transceiver 910 comprising a transmitter 912 and receiver 914, a power module 908, and a wireless communication device Capability Confirmation (CC) module 920.

In this embodiment, the system clock 902 provides the timing signals to the processor 904 for controlling the timing of all operations of the NN 900. The processor 904 controls the general operation of the NN 900 and can include one or more processing circuits or modules such as a central processing unit (CPU) and/or any combination of general-purpose microprocessors, microcontrollers, digital signal processors (DSPs), field programmable gate array (FPGAs), programmable logic devices (PLDs), controllers, state machines, gated logic, discrete hardware components, dedicated hardware finite state machines, or any other suitable circuits, devices and/or structures that can perform calculations or other manipulations of data.

The memory 906, which can include both read-only memory (ROM) and random access memory (RAM), can provide instructions and data to the processor 904. A portion of the memory 906 can also include non-volatile random access memory (NVRAM). The processor 904 typically performs logical and arithmetic operations based on program instructions stored within the memory 906. The instructions (a.k.a., software) stored in the memory 906 can be executed by the processor 904 to perform the methods described herein. The processor 904 and memory 906 together form a processing system that stores and executes software. As used herein, "software" means any type of instructions, whether referred to as software, firmware, middleware, microcode, etc. which can configure a machine or device to perform one or more desired functions or processes. Instructions can include code (e.g., in source code format, binary code format, executable code format, or any other suitable format of code). The instructions, when executed by the one or more processors, cause the processing system to perform the various functions described herein.

The transceiver 910, which includes the transmitter 912 and receiver 914, allows the NN 900 to transmit and receive data to and from an external network node (e.g., an UE or AP). An antenna 950 is typically attached to the housing 940 and electrically coupled to the transceiver 910. In various embodiments, the NN 900 includes (not shown) multiple transmitters, multiple receivers, and multiple transceivers. In some embodiments, the antenna 950 includes a multi-antenna array that can form a plurality of beams each of which points in a distinct direction in accordance with MIMO beamforming techniques.

The CC module 920 may be implemented as part of the processor 904 programmed to perform the functions herein, or it may be a separate module implemented in hardware, firmware, software or a combination thereof. In accordance with various embodiments, the NN 900 is a wireless communication node, and the CC module 920 and transceiver 910 are configured to perform the method of Figure 4, as described above. In further embodiments, the NN 900 is a wireless communication device, and the CC module 920 and transceiver 910 are configured to perform the method of Figure 5, as described above. In some embodiments, the CC module 920 can be implemented as software (i.e., computer executable instructions) stored in a non-transitory computer-readable medium that when executed by processor 904, transform the processor 904 into a special-purpose computer to perform the wireless communication device capability confirmation methods and operations described herein.

The various components and modules discussed above within housing 940 are coupled together by a bus system 930. The bus system 930 can include a data bus and, for example, a power bus, a control signal bus, and/or a status signal bus in addition to the data bus. It is understood that the modules of the NN 900 can be operatively coupled to one another using any suitable techniques and mediums. It is further understood that additional modules (not shown) may be included in the NN 900 without departing from the scope of the disclosure.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A person of ordinary skill in the art would further appreciate that any of the various illustrative logical blocks, modules, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software module), or any combination of these techniques.

To clearly illustrate this interchangeability of hardware, firmware and software, various illustrative components, blocks, modules, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, module, etc. can be configured to perform one or more of the functions described herein. The term "configured to" or "configured for" as used herein with respect to a specified operation or function refers to a processor, device, component, circuit, structure, machine, module, etc. that is physically constructed, programmed and/or arranged to perform the specified operation or function.

Furthermore, a person of ordinary skill in the art would understand that various illustrative logical blocks, modules, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, modules, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein.

If implemented in software, the functions can be stored as one or more instructions or code on a computer-readable medium. Thus, the steps of a method or algorithm disclosed herein can be implemented as software stored on a computer-readable medium. Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "module" as used herein, refers to software, firmware, hardware, and any combination of these elements for performing the associated functions described herein. Additionally, for purpose of discussion, the various modules are described as discrete modules; however, as would be apparent to one of ordinary skill in the art, two or more modules may be combined to form a single module that performs the associated functions according embodiments of the present disclosure.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

## Claims

1. A method performed by a wireless communication node (101, 620, 720, 820, 900) to confirm a capability of a wireless communication device (110, 120, 130, 610, 710, 810, 900), the method comprising:
detecting (402) whether there is a possible fake capability associated with a first capability reported by a first wireless communication device, a fake capability representing a capability reportedly supported by the wireless communication device and actually not supported or partially supported by the wireless communication device;
in response to detecting the possible fake capability, transmitting (404) a first capability confirmation enquiry message to the first wireless communication device to enquire about the first capability;
receiving (406) a capability confirmation reply message from the first wireless communication device, the capability confirmation reply message containing information about the first capability;
determining (408) that at least a portion of the first capability is a fake capability based on the information about the first capability; and
providing (410) a network resource configuration to the wireless communication device so as to avoid using or involving the fake capability of the first wireless communication device.

2. The method of claim 1, further comprising:
determining (412) that the fake capability may be a fake capability of at least one second wireless communication device; and
sending a second capability confirmation enquiry message to the second wireless communication device to enquire about the first capability with respect to the second wireless communication device.

3. The method of claim 1, wherein the first capability confirmation enquiry message is contained in:
an enhanced UECapabilityEnquiry message, and wherein the capability confirmation reply message is contained in an enhanced UECapabilityInformation message transmitted by the first wireless communication device; or
an enhanced RRCReconfiguration message transmitted by the wireless communication node (101, 620, 720, 820, 900), wherein the enhanced RRCReconfiguration message enables the first wireless communication device to actively initiate transmission of the capability confirmation reply message at a future time as determined by the first wireless communication device, and wherein the capability confirmation reply message is contained in an enhanced UEAssistanceInformation message transmitted by the first wireless communication device.

4. The method of claim 1, wherein:
the first capability is defined by a bandwidth part, BWP, usage constraint reported by the first wireless communication device, wherein the information about the first capability indicates that at least one BWP identified in the BWP usage constraint as being supported by the first wireless communication device is a fake capability of the first wireless communication device, and wherein the configuring at least one network resource comprises avoiding using the least one BWP for future communications with the first wireless communication device;
or
the first capability is defined by a transport block, TB, size constraint reported by the first wireless communication device, wherein the information about the first capability indicates that at least one TB size identified in the TB size constraint as being supported by the first UE is a fake capability of the first wireless communication device, and wherein the providing the network resource configuration comprises avoiding using the least one TB size for future communications with the first wireless communication device;
or
the first capability is defined by a bandwidth, BW, constraint reported by the first wireless communication device, wherein the information about the first capability indicates that at least one BW range identified in the BW constraint as being supported by the first wireless communication device is a fake capability of the first wireless communication device, and wherein the configuring at least one network resource comprises avoiding using the least one BW range for future communications with the first wireless communication device.

5. A method performed by a wireless communication device (110, 120, 130, 610, 710, 810, 900) to confirm a capability of the wireless communication device to a wireless communication node (101, 620, 720, 820, 900), the method comprising:
receiving (502) a first capability confirmation enquiry message from the wireless communication node (101, 620, 720, 820, 900), the first capability confirmation enquiry message enquiring about a first capability reported by the wireless communication device, wherein the enquiry message indicates a possible fake capability associated with the first capability of the first wireless communication device, a fake capability representing a capability reportedly supported by the wireless communication device and actually not supported or partially supported by the wireless communication device;
determining (504) that at least a portion of the first capability is a fake capability of the wireless communication device;
transmitting (506) a capability confirmation reply message to the wireless communication node (101, 620, 720, 820, 900), the capability confirmation reply message containing information about the fake capability; and
receiving (508) a network resource configuration from the wireless communication node such that future communications with the wireless communication node no longer use or involve the fake capability.

6. The method of claim 5, wherein the first capability confirmation enquiry message is contained in:
an enhanced UECapabilityEnquiry message, and wherein the capability confirmation reply message is contained in an enhanced UECapabilityInformation message transmitted by the first wireless communication device; or
an enhanced RRCReconfiguration message transmitted by the wireless communication node (101, 620, 720, 820, 900), wherein the enhanced RRCReconfiguration message enables the wireless communication device to actively initiate transmission of the capability confirmation reply message at a future time as determined by the wireless communication device, and wherein the capability confirmation reply message is contained in an enhanced UEAssistanceInformation message transmitted by the first wireless communication device.

7. The method of claim 5, wherein:
the first capability is defined by a bandwidth part, BWP, usage constraint reported by the wireless communication device;
the fake capability comprises at least one BWP identified in the BWP usage constraint as being supported by the wireless communication device; and
the future communications between the wireless communication device and the wireless communication node (101, 620, 720, 820, 900) avoid using the least one BWP.

8. The method of claim 5, wherein:
the first capability is defined by a transport block, TB, size constraint reported by the wireless communication device;
the fake capability comprises at least one TB size identified in the TB size constraint as being supported by the wireless communication device; and
the future communications between the wireless communication device and the wireless communication node (101, 620, 720, 820, 900) avoid using the least one TB size.

9. The method of claim 5, wherein:
the first capability is defined by a bandwidth, BW, constraint reported by the wireless communication device;
the fake capability comprises at least one BW range identified in the BW constraint as being supported by the wireless communication device; and
the future communications between the wireless communication device and the wireless communication node avoid using the least one BW range.

10. A wireless communication node (101, 620, 720, 820, 900) comprising:
at least one processor (904) configured to detect whether there is a possible fake capability associated with a first capability reported by a first wireless communication device (110, 120, 130, 610, 710, 810, 900), a fake capability representing a capability reportedly supported by the wireless communication device and actually not supported or partially supported by the wireless communication device; and
a transceiver (910) configured to: in response to the possible fake capability being detected, transmit a first capability confirmation enquiry message to the first wireless communication device to enquire about the first capability; and
receive a capability confirmation reply message from the first wireless communication device, the capability confirmation reply message containing information about the first capability, wherein the at least one processor is further configured to:
determine that at least a portion of the first capability is a fake capability based on the information about the first capability; and
provide a network resource configuration to the wireless communication device so as to avoid using or involving the fake capability of the first wireless communication device.

11. The wireless communication node of claim 10, wherein the at least one processor is further configured to:
determine that the fake capability may be a fake capability of at least one second wireless communication device; and
send a second capability confirmation enquiry message to the second wireless communication device to enquire about the first capability with respect to the second wireless communication device.

12. The wireless communication node of claim 10, wherein the first capability confirmation enquiry message is contained in:
an enhanced UECapabilityEnquiry message, and the capability confirmation reply message is contained in an enhanced UECapabilityInformation message transmitted by the first wireless communication device; or
an enhanced RRCReconfiguration message transmitted by the wireless communication device node, wherein the enhanced RRCReconfiguration message enables the first wireless communication device to actively initiate transmission of the capability confirmation reply message at a future time as determined by the first wireless communication device, and wherein the capability confirmation reply message is contained in an enhanced UEAssistanceInformation message transmitted by the first wireless communication device.

13. The wireless communication node of claim 10, wherein:
the first capability is defined by a bandwidth part, BWP, usage constraint reported by the first wireless communication device;
the information about the first capability indicates that at least one BWP identified in the BWP usage constraint as being supported by the first wireless communication device is a fake capability of the first wireless communication device; and
the configuring at least one network resource comprises avoiding using the least one BWP for future communications with the first wireless communication device.

14. The wireless communication node of claim 10, wherein:
the first capability is defined by a transport block, TB, size constraint reported by the first wireless communication device;
the information about the first capability indicates that at least one TB size identified in the TB size constraint as being supported by the first wireless communication device is a fake capability of the first wireless communication device; and
the configuring at least one network resource comprises avoiding using the least one TB size for future communications with the first wireless communication device.

15. The wireless communication node of claim 10, wherein:
the first capability is defined by a bandwidth, BW, constraint reported by the first wireless communication device;
the information about the first capability indicates that at least one BW range identified in the BW constraint as being supported by the first wireless communication device is a fake capability of the first wireless communication device; and
the configuring at least one network resource comprises avoiding using the least one BW range for future communications with the first wireless communication device.

## Patentansprüche

1. Verfahren, das durch einen Drahtloskommunikationsknoten (101, 620, 720, 820, 900) durchgeführt wird, um eine Fähigkeit einer Drahtloskommunikationsvorrichtung (110, 120, 130, 610, 710, 810, 900) zu bestätigen, wobei das Verfahren aufweist:
Erkennen (402), ob eine mögliche falsche Fähigkeit vorhanden ist, die mit einer ersten Fähigkeit verknüpft ist, die durch eine erste Drahtloskommunikationsvorrichtung gemeldet wird, wobei eine falsche Fähigkeit eine Fähigkeit, die angeblich durch die Drahtloskommunikationsvorrichtung unterstützt wird, darstellt und tatsächlich nicht unterstützt oder teilweise durch die Drahtloskommunikationsvorrichtung unterstützt wird;
als Reaktion auf das Erkennen der möglichen falschen Fähigkeit, Übertragen (404) einer ersten Fähigkeitsbestätigungsanfragenachricht an die erste Drahtloskommunikationsvorrichtung, um über die erste Fähigkeit anzufragen;
Empfangen (406) einer Fähigkeitsbestätigungsantwortnachricht von der ersten Drahtloskommunikationsvorrichtung, wobei die Fähigkeitsbestätigungsantwortnachricht Informationen über die erste Fähigkeit enthält;
Bestimmen (408), dass mindestens ein Anteil der ersten Fähigkeit eine falsche Fähigkeit, basierend auf den Informationen über die erste Fähigkeit, ist; und
Bereitstellen (410) einer Netzressourcenkonfiguration an die Drahtloskommunikationsvorrichtung, um eine Verwendung oder Einbeziehung der falschen Fähigkeit der ersten Drahtloskommunikationsvorrichtung zu vermeiden.

2. Verfahren nach Anspruch 1, ferner aufweisend:
Bestimmen (412), dass die falsche Fähigkeit eine falsche Fähigkeit mindestens einer zweiten Drahtloskommunikationsvorrichtung sein kann; und
Senden einer zweiten Fähigkeitsbestätigungsanfragenachricht an die zweite Drahtloskommunikationsvorrichtung, um über die erste Fähigkeit hinsichtlich der zweiten Drahtloskommunikationsvorrichtung anzufragen.

3. Verfahren nach Anspruch 1, wobei die erste Fähigkeitsbestätigungsanfragenachricht enthalten ist in:
einer erweiterten UE-Fähigkeitsanfragenachricht, und wobei die Fähigkeitsbestätigungsantwortnachricht in einer erweiterten UE-Fähigkeitsinformationsnachricht, die durch die erste Drahtloskommunikationsvorrichtung übertragen wird, enthalten ist; oder
einer erweiterten RRC-Rekonfigurationsnachricht, die durch den Drahtloskommunikationsknoten (101, 620, 720, 820, 900) übertragen wird, wobei die erweiterte RRC-Rekonfigurationsnachricht der ersten Drahtloskommunikationsvorrichtung ermöglicht, eine Übertragung der Fähigkeitsbestätigungsantwortnachricht zu einem zukünftigen Zeitpunkt, wie durch die erste Drahtloskommunikationsvorrichtung bestimmt, aktiv zu initiieren, und wobei die Fähigkeitsbestätigungsantwortnachricht in einer erweiterten UE-Assistenzinformationsnachricht, die durch die erste Drahtloskommunikationsvorrichtung übertragen wird, enthalten ist.

4. Verfahren nach Anspruch 1, wobei:
die erste Fähigkeit durch eine Bandbreitenteilnutzungsbeschränkung, BWP-Nutzungsbeschränkung, die durch die erste Drahtloskommunikationsvorrichtung gemeldet wird, definiert ist, wobei die Informationen über die erste Fähigkeit angeben, dass mindestens ein BWP, der in der BWP-Nutzungsbeschränkung als durch die erste Drahtloskommunikationsvorrichtung unterstützt identifiziert ist, eine falsche Fähigkeit der ersten Drahtloskommunikationsvorrichtung ist, und wobei das Konfigurieren mindestens einer Netzressource das Vermeiden der Verwendung des mindestens einen BWP für zukünftige Kommunikationen mit der ersten Drahtloskommunikationsvorrichtung aufweist;
oder
die erste Fähigkeit durch eine Transportblockgrößenbeschränkung, TB-Größenbeschränkung, die durch die erste Drahtloskommunikationsvorrichtung gemeldet wird, definiert ist, wobei die Informationen über die erste Fähigkeit angeben, dass mindestens eine TB-Größe, die in der TB-Größenbeschränkung als durch die erste UE unterstützt identifiziert ist, eine falsche Fähigkeit der ersten Drahtloskommunikationsvorrichtung ist, und wobei das Bereitstellen der Netzressourcenkonfiguration das Vermeiden der Verwendung der mindestens einen TB-Größe für zukünftige Kommunikationen mit der ersten Drahtloskommunikationsvorrichtung aufweist;
oder
die erste Fähigkeit durch eine Bandbreitenbeschränkung, BW-Beschränkung, die durch die erste Drahtloskommunikationsvorrichtung gemeldet wird, definiert ist, wobei die Informationen über die erste Fähigkeit angeben, dass mindestens ein BW-Bereich, der in der BW-Beschränkung als durch die erste Drahtloskommunikationsvorrichtung unterstützt identifiziert ist, eine falsche Fähigkeit der ersten Drahtloskommunikationsvorrichtung ist, und wobei das Konfigurieren mindestens einer Netzressource das Vermeiden der Verwendung des mindestens einen BW-Bereichs für zukünftige Kommunikationen mit der ersten Drahtloskommunikationsvorrichtung aufweist.

5. Verfahren, das durch eine Drahtloskommunikationsvorrichtung (110, 120, 130, 610, 710, 810, 900) durchgeführt wird, um eine Fähigkeit der Drahtloskommunikationsvorrichtung gegenüber einem Drahtloskommunikationsknoten (101, 620, 720, 820, 900) zu bestätigen, wobei das Verfahren aufweist:
Empfangen (502) einer ersten Fähigkeitsbestätigungsanfragenachricht von dem Drahtloskommunikationsknoten (101, 620, 720, 820, 900), wobei die erste Fähigkeitsbestätigungsanfragenachricht über eine erste Fähigkeit, die durch die Drahtloskommunikationsvorrichtung gemeldet wird, anfragt, wobei die Anfragenachricht eine mögliche falsche Fähigkeit, die mit der ersten Fähigkeit der ersten Drahtloskommunikationsvorrichtung verknüpft ist, indiziert, wobei eine falsche Fähigkeit eine Fähigkeit, die angeblich durch die Drahtloskommunikationsvorrichtung unterstützt wird, darstellt und tatsächlich nicht unterstützt oder teilweise durch die Drahtloskommunikationsvorrichtung unterstützt wird;
Bestimmen (504), dass mindestens ein Anteil der ersten Fähigkeit eine falsche Fähigkeit der Drahtloskommunikationsvorrichtung ist;
Übertragen (506) einer Fähigkeitsbestätigungsantwortnachricht an den Drahtloskommunikationsknoten (101, 620, 720, 820, 900), wobei die Fähigkeitsbestätigungsantwortnachricht Informationen über die falsche Fähigkeit enthält; und
Empfangen (508) einer Netzressourcenkonfiguration von dem Drahtloskommunikationsknoten derart, dass zukünftige Kommunikationen mit dem Drahtloskommunikationsknoten die falsche Fähigkeit nicht mehr verwenden oder einbeziehen.

6. Verfahren nach Anspruch 5, wobei die erste Fähigkeitsbestätigungsanfragenachricht enthalten ist in:
einer erweiterten UE-Fähigkeitsanfragenachricht, und wobei die Fähigkeitsbestätigungsantwortnachricht in einer erweiterten UE-Fähigkeitsinformationsnachricht, die durch die erste Drahtloskommunikationsvorrichtung übertragen wird, enthalten ist; oder
einer erweiterten RRC-Rekonfigurationsnachricht, die durch den Drahtloskommunikationsknoten (101, 620, 720, 820, 900) übertragen wird, wobei die erweiterte RRC-Rekonfigurationsnachricht der Drahtloskommunikationsvorrichtung ermöglicht, die Übertragung der Fähigkeitsbestätigungsantwortnachricht zu einem zukünftigen Zeitpunkt, wie durch die Drahtloskommunikationsvorrichtung bestimmt, aktiv zu initiieren, und wobei die Fähigkeitsbestätigungsantwortnachricht in einer erweiterten UE-Assistenzinformationsnachricht, die durch die erste Drahtloskommunikationsvorrichtung übertragen wird, enthalten ist.

7. Verfahren nach Anspruch 5, wobei:
die erste Fähigkeit durch eine Bandbreitenteilnutzungsbeschränkung, BWP-Nutzungsbeschränkung, die durch die Drahtloskommunikationsvorrichtung gemeldet wird, definiert ist;
die falsche Fähigkeit mindestens einen BWP, der in der BWP-Nutzungsbeschränkung als durch die Drahtloskommunikationsvorrichtung unterstützt identifiziert ist, aufweist; und
die zukünftigen Kommunikationen zwischen der Drahtloskommunikationsvorrichtung und dem Drahtloskommunikationsknoten (101, 620, 720, 820, 900) die Verwendung des mindestens einen BWP vermeiden.

8. Verfahren nach Anspruch 5, wobei:
die erste Fähigkeit durch eine Transportblockgrößenbeschränkung, TB-Größenbeschränkung, die durch die Drahtloskommunikationsvorrichtung gemeldet wird, definiert ist;
die falsche Fähigkeit mindestens eine TB-Größe, die in der TB-Größenbeschränkung als durch die Drahtloskommunikationsvorrichtung unterstützt identifiziert ist, aufweist; und
die zukünftigen Kommunikationen zwischen der Drahtloskommunikationsvorrichtung und dem Drahtloskommunikationsknoten (101, 620, 720, 820, 900) die Verwendung der mindestens einen TB-Größe vermeiden.

9. Verfahren nach Anspruch 5, wobei:
die erste Fähigkeit durch eine Bandbreitenbeschränkung, BW-Beschränkung, die durch die Drahtloskommunikationsvorrichtung gemeldet wird, definiert ist;
die falsche Fähigkeit mindestens einen BW-Bereich, der in der BW-Beschränkung als durch die Drahtloskommunikationsvorrichtung unterstützt identifiziert ist, aufweist; und
die zukünftigen Kommunikationen zwischen der Drahtloskommunikationsvorrichtung und dem Drahtloskommunikationsknoten die Verwendung des mindestens einen BW-Bereichs vermeiden.

10. Drahtloskommunikationsknoten (101, 620, 720, 820, 900), aufweisend:
mindestens einen Prozessor (904), der konfiguriert ist, um zu erkennen, ob eine mögliche falsche Fähigkeit vorhanden ist, die mit einer ersten Fähigkeit verknüpft ist, die durch eine erste Drahtloskommunikationsvorrichtung (110, 120, 130, 610, 710, 810, 900) gemeldet wird, wobei eine falsche Fähigkeit eine Fähigkeit, die angeblich durch die Drahtloskommunikationsvorrichtung unterstützt wird, darstellt und tatsächlich nicht unterstützt oder teilweise durch die Drahtloskommunikationsvorrichtung unterstützt wird; und
einen Transceiver (910), der konfiguriert ist zum: als Reaktion darauf, dass die mögliche falsche Fähigkeit erkannt wird, Übertragen einer ersten Fähigkeitsbestätigungsanfragenachricht an die erste Drahtloskommunikationsvorrichtung, um über die erste Fähigkeit anzufragen; und
Empfangen einer Fähigkeitsbestätigungsantwortnachricht von der ersten Drahtloskommunikationsvorrichtung, wobei die Fähigkeitsbestätigungsantwortnachricht Informationen über die erste Fähigkeit enthält, wobei der mindestens eine Prozessor ferner konfiguriert ist zum:
Bestimmen, dass mindestens ein Anteil der ersten Fähigkeit eine falsche Fähigkeit, basierend auf den Informationen über die erste Fähigkeit, ist; und
Bereitstellen einer Netzressourcenkonfiguration an die Drahtloskommunikationsvorrichtung, um die Verwendung oder Einbeziehung der falschen Fähigkeit der ersten Drahtloskommunikationsvorrichtung zu vermeiden.

11. Drahtloskommunikationsknoten nach Anspruch 10, wobei der mindestens eine Prozessor ferner konfiguriert ist zum:
Bestimmen, dass die falsche Fähigkeit eine falsche Fähigkeit mindestens einer zweiten Drahtloskommunikationsvorrichtung sein kann; und
Senden einer zweiten Fähigkeitsbestätigungsanfragenachricht an die zweite Drahtloskommunikationsvorrichtung, um über die erste Fähigkeit hinsichtlich der zweiten Drahtloskommunikationsvorrichtung anzufragen.

12. Drahtloskommunikationsknoten nach Anspruch 10, wobei die erste Fähigkeitsbestätigungsanfragenachricht enthalten ist in:
einer erweiterten UE-Fähigkeitsanfragenachricht und die Fähigkeitsbestätigungsantwortnachricht in einer erweiterten UE-Fähigkeitsinformationsnachricht, die durch die erste Drahtloskommunikationsvorrichtung übertragen wird, enthalten ist; oder
einer erweiterten RRC-Rekonfigurationsnachricht, die durch den Drahtloskommunikationsvorrichtungsknoten übertragen wird, wobei die erweiterte RRC-Rekonfigurationsnachricht der ersten Drahtloskommunikationsvorrichtung ermöglicht, die Übertragung der Fähigkeitsbestätigungsantwortnachricht zu einem zukünftigen Zeitpunkt, wie durch die erste Drahtloskommunikationsvorrichtung bestimmt, aktiv zu initiieren, und wobei die Fähigkeitsbestätigungsantwortnachricht in einer erweiterten UE-Assistenzinformationsnachricht, die durch die erste Drahtloskommunikationsvorrichtung übertragen wird, enthalten ist.

13. Drahtloskommunikationsknoten nach Anspruch 10, wobei:
die erste Fähigkeit durch eine Bandbreitenteilnutzungsbeschränkung, BWP-Nutzungsbeschränkung, die durch die erste Drahtloskommunikationsvorrichtung gemeldet wird, definiert ist;
die Informationen über die erste Fähigkeit angeben, dass mindestens ein BWP, der in der BWP-Nutzungsbeschränkung als durch die erste Drahtloskommunikationsvorrichtung unterstützt identifiziert ist, eine falsche Fähigkeit der ersten Drahtloskommunikationsvorrichtung ist; und
das Konfigurieren mindestens einer Netzressource das Vermeiden der Verwendung des mindestens einen BWP für zukünftige Kommunikationen mit der ersten Drahtloskommunikationsvorrichtung aufweist.

14. Drahtloskommunikationsknoten nach Anspruch 10, wobei:
die erste Fähigkeit durch eine Transportblockgrößenbeschränkung, TB-Größenbeschränkung, die durch die erste Drahtloskommunikationsvorrichtung gemeldet wird, definiert ist;
die Informationen über die erste Fähigkeit angeben, dass mindestens eine TB-Größe, die in der TB-Größenbeschränkung als durch die erste Drahtloskommunikationsvorrichtung unterstützt identifiziert ist, eine falsche Fähigkeit der ersten Drahtloskommunikationsvorrichtung ist; und
das Konfigurieren mindestens einer Netzressource das Vermeiden der Verwendung der mindestens einen TB-Größe für zukünftige Kommunikationen mit der ersten Drahtloskommunikationsvorrichtung aufweist.

15. Drahtloskommunikationsknoten nach Anspruch 10, wobei:
die erste Fähigkeit durch eine Bandbreitenbeschränkung, BW-Beschränkung, die durch die erste Drahtloskommunikationsvorrichtung gemeldet wird, definiert ist;
die Informationen über die erste Fähigkeit angeben, dass mindestens ein BW-Bereich, der in der BW-Beschränkung als durch die erste Drahtloskommunikationsvorrichtung unterstützt identifiziert ist, eine falsche Fähigkeit der ersten Drahtloskommunikationsvorrichtung ist; und
das Konfigurieren mindestens einer Netzressource das Vermeiden der Verwendung des mindestens einen BW-Bereichs für zukünftige Kommunikationen mit der ersten Drahtloskommunikationsvorrichtung aufweist.

## Revendications

1. Procédé réalisé par un nœud de communication sans fil (101, 620, 720, 820, 900) pour confirmer une capacité d'un dispositif de communication sans fil (110, 120, 130, 610, 710, 810, 900), le procédé comprenant :
le fait de détecter (402) s'il existe une éventuelle fausse capacité associée à une première capacité signalée par un premier dispositif de communication sans fil, une fausse capacité représentant une capacité apparemment prise en charge par le dispositif de communication sans fil et qui n'est en fait pas prise en charge ou partiellement prise en charge par le dispositif de communication sans fil ;
en réponse à la détection de l'éventuelle fausse capacité, la transmission (404) d'un premier message d'interrogation de confirmation de capacité au premier dispositif de communication sans fil pour s'enquérir de la première capacité ;
la réception (406) d'un message de réponse de confirmation de capacité à partir du premier dispositif de communication sans fil, le message de réponse de confirmation de capacité contenant des informations concernant la première capacité ;
le fait de déterminer (408) qu'au moins une partie de la première capacité est une fausse capacité sur la base des informations concernant la première capacité ; et
la fourniture (410) d'une configuration de ressources réseau au dispositif de communication sans fil afin d'éviter d'utiliser ou d'impliquer la fausse capacité du premier dispositif de communication sans fil.

2. Procédé selon la revendication 1, comprenant en outre :
le fait de déterminer (412) que la fausse capacité peut être une fausse capacité d'au moins un second dispositif de communication sans fil ; et
l'envoi d'un second message d'interrogation de confirmation de capacité au second dispositif de communication sans fil pour s'enquérir de la première capacité par rapport au second dispositif de communication sans fil.

3. Procédé selon la revendication 1, dans lequel le premier message d'interrogation de confirmation de capacité est contenu dans :
un message d'UECapabilityEnquiry amélioré, et dans lequel le message de réponse de confirmation de capacité est contenu dans un message d'UECapabilitylnformation amélioré transmis par le premier dispositif de communication sans fil ; ou
un message de RRCReconfiguration amélioré transmis par le nœud de communication sans fil (101, 620, 720, 820, 900), dans lequel le message de RRCReconfiguration amélioré permet au premier dispositif de communication sans fil d'initier activement la transmission du message de réponse de confirmation de capacité à un moment futur tel que déterminé par le premier dispositif de communication sans fil, et dans lequel le message de réponse de confirmation de capacité est contenu dans un message d'UEAssistancelnformation amélioré transmis par le premier dispositif de communication sans fil.

4. Procédé selon la revendication 1, dans lequel :
la première capacité est définie par une contrainte d'utilisation de partie de largeur de bande, BWP, signalée par le premier dispositif de communication sans fil, dans lequel les informations concernant la première capacité indiquent qu'au moins une BWP identifiée dans la contrainte d'utilisation de BWP comme étant prise en charge par le premier dispositif de communication sans fil est une fausse capacité du premier dispositif de communication sans fil, et dans lequel la configuration d'au moins une ressource réseau comprend le fait d'éviter d'utiliser l'au moins une BWP pour des communications futures avec le premier dispositif de communication sans fil ;
ou
la première capacité est définie par une contrainte de taille de bloc de transport, TB, signalée par le premier dispositif de communication sans fil, dans lequel les informations concernant la première capacité indiquent qu'au moins une taille de TB identifiée dans la contrainte de taille de TB comme étant prise en charge par le premier UE est une fausse capacité du premier dispositif de communication sans fil, et dans lequel la fourniture de la configuration de ressources réseau comprend le fait d'éviter d'utiliser l'au moins une taille de TB pour des communications futures avec le premier dispositif de communication sans fil ;
ou
la première capacité est définie par une contrainte de largeur de bande, BW, signalée par le premier dispositif de communication sans fil, dans lequel les informations concernant la première capacité indiquent qu'au moins une plage de BW identifiée dans la contrainte de BW comme étant prise en charge par le premier dispositif de communication sans fil est une fausse capacité du premier dispositif de communication sans fil, et dans lequel la configuration d'au moins une ressource réseau comprend le fait d'éviter d'utiliser l'au moins une plage de BW pour des communications futures avec le premier dispositif de communication sans fil.

5. Procédé réalisé par un dispositif de communication sans fil (110, 120, 130, 610, 710, 810, 900) pour confirmer une capacité du dispositif de communication sans fil à un nœud de communication sans fil (101, 620, 720, 820, 900), le procédé comprenant :
la réception (502) d'un premier message d'interrogation de confirmation de capacité provenant du nœud de communication sans fil (101, 620, 720, 820, 900), le premier message d'interrogation de confirmation de capacité s'enquérant d'une première capacité signalée par le dispositif de communication sans fil, dans lequel le message d'interrogation indique une éventuelle fausse capacité associée à la première capacité du premier dispositif de communication sans fil, une fausse capacité représentant une capacité apparemment prise en charge par le dispositif de communication sans fil et qui n'est en fait pas prise en charge ou partiellement prise en charge par le dispositif de communication sans fil ;
le fait de déterminer (504) qu'au moins une partie de la première capacité est une fausse capacité du dispositif de communication sans fil ;
la transmission (506) d'un message de réponse de confirmation de capacité au nœud de communication sans fil (101, 620, 720, 820, 900), le message de réponse de confirmation de capacité contenant des informations concernant la fausse capacité ; et
la réception (508) d'une configuration de ressources réseau à partir du nœud de communication sans fil de telle sorte que des communications futures avec le nœud de communication sans fil n'utilisent plus ou n'impliquent plus la fausse capacité.

6. Procédé selon la revendication 5, dans lequel le premier message d'interrogation de confirmation de capacité est contenu dans :
un message d'UECapabilityEnquiry amélioré, et dans lequel le message de réponse de confirmation de capacité est contenu dans un message d'UECapabilitylnformation amélioré transmis par le premier dispositif de communication sans fil ; ou
un message de RRCReconfiguration amélioré transmis par le nœud de communication sans fil (101, 620, 720, 820, 900), dans lequel le message de RRCReconfiguration amélioré permet au dispositif de communication sans fil d'initier activement la transmission du message de réponse de confirmation de capacité à un moment futur tel que déterminé par le dispositif de communication sans fil, et dans lequel le message de réponse de confirmation de capacité est contenu dans un message d'UEAssistancelnformation amélioré transmis par le premier dispositif de communication sans fil.

7. Procédé selon la revendication 5, dans lequel :
la première capacité est définie par une contrainte d'utilisation de partie de largeur de bande, BWP, signalée par le dispositif de communication sans fil ;
la fausse capacité comprend au moins une BWP identifiée dans la contrainte d'utilisation de BWP comme étant prise en charge par le dispositif de communication sans fil ; et
les communications futures entre le dispositif de communication sans fil et le nœud de communication sans fil (101, 620, 720, 820, 900) évitent d'utiliser l'au moins une BWP.

8. Procédé selon la revendication 5, dans lequel :
la première capacité est définie par une contrainte de taille de bloc de transport, TB, signalée par le dispositif de communication sans fil ;
la fausse capacité comprend au moins une taille de TB identifiée dans la contrainte de taille de TB comme étant prise en charge par le dispositif de communication sans fil ; et
les communications futures entre le dispositif de communication sans fil et le nœud de communication sans fil (101, 620, 720, 820, 900) évitent d'utiliser l'au moins une taille de TB.

9. Procédé selon la revendication 5, dans lequel :
la première capacité est définie par une contrainte de largeur de bande, BW, signalée par le dispositif de communication sans fil ;
la fausse capacité comprend au moins une plage de BW identifiée dans la contrainte de BW comme étant prise en charge par le dispositif de communication sans fil ; et
les communications futures entre le dispositif de communication sans fil et le noeud de communication sans fil évitent d'utiliser l'au moins une plage de BW.

10. Nœud de communication sans fil (101, 620, 720, 820, 900) comprenant :
au moins un processeur (904) configuré pour détecter s'il existe une éventuelle fausse capacité associée à une première capacité signalée par un premier dispositif de communication sans fil (110, 120, 130, 610, 710, 810, 900), une fausse capacité représentant une capacité apparemment prise en charge par le dispositif de communication sans fil et qui n'est en fait pas prise en charge ou partiellement prise en charge par le dispositif de communication sans fil ; et
un émetteur-récepteur (910) configuré pour : en réponse à la détection de l'éventuelle fausse capacité, transmettre un premier message d'interrogation de confirmation de capacité au premier dispositif de communication sans fil pour s'enquérir de la première capacité ; et
recevoir un message de réponse de confirmation de capacité à partir du premier dispositif de communication sans fil, le message de réponse de confirmation de capacité contenant des informations concernant la première capacité, dans lequel l'au moins un processeur est en outre configuré pour :
déterminer qu'au moins une partie de la première capacité est une fausse capacité sur la base des informations concernant la première capacité ; et
fournir une configuration de ressources réseau au dispositif de communication sans fil afin d'éviter d'utiliser ou d'impliquer la fausse capacité du premier dispositif de communication sans fil.

11. Nœud de communication selon la revendication 10, dans lequel l'au moins un processeur est configuré en outre pour :
déterminer que la fausse capacité peut être une fausse capacité d'au moins un second dispositif de communication sans fil ; et
envoyer un second message d'interrogation de confirmation de capacité au second dispositif de communication sans fil pour s'enquérir de la première capacité par rapport au second dispositif de communication sans fil.

12. Nœud de communication sans fil selon la revendication 10, dans lequel le premier message d'interrogation de confirmation de capacité est contenu dans :
un message d'UECapabilityEnquiry amélioré, et le message de réponse de confirmation de capacité est contenu dans un message d'UECapabilitylnformation amélioré transmis par le premier dispositif de communication sans fil ; ou
un message de RRCReconfiguration amélioré transmis par le nœud de dispositif de communication sans fil, dans lequel le message de RRCReconfiguration amélioré permet au premier dispositif de communication sans fil d'initier activement la transmission du message de réponse de confirmation de capacité à un moment futur tel que déterminé par le premier dispositif de communication sans fil, et dans lequel le message de réponse de confirmation de capacité est contenu dans un message d'UEAssistancelnformation amélioré transmis par le premier dispositif de communication sans fil.

13. Nœud de communication sans fil selon la revendication 10, dans lequel :
la première capacité est définie par une contrainte d'utilisation de partie de largeur de bande, BWP, signalée par le premier dispositif de communication sans fil ;
les informations concernant la première capacité indiquent qu'au moins une BWP identifiée dans la contrainte d'utilisation de BWP comme étant prise en charge par le premier dispositif de communication sans fil est une fausse capacité du premier dispositif de communication sans fil ; et
la configuration d'au moins une ressource réseau comprend le fait d'éviter d'utiliser l'au moins une BWP pour des communications futures avec le premier dispositif de communication sans fil.

14. Nœud de communication sans fil selon la revendication 10, dans lequel :
la première capacité est définie par une contrainte de taille de bloc de transport, TB, signalée par le premier dispositif de communication sans fil ;
les informations concernant la première capacité indiquent qu'au moins une taille de TB identifiée dans la contrainte de taille de TB comme étant prise en charge par le premier dispositif de communication sans fil est une fausse capacité du premier dispositif de communication sans fil ; et
la configuration d'au moins une ressource réseau comprend le fait d'éviter d'utiliser l'au moins une taille de TB pour des communications futures avec le premier dispositif de communication sans fil.

15. Nœud de communication sans fil selon la revendication 10, dans lequel :
la première capacité est définie par une contrainte de largeur de bande, BW, signalée par le premier dispositif de communication sans fil ;
les informations concernant la première capacité indiquent qu'au moins une plage BW identifiée dans la contrainte BW comme étant prise en charge par le premier dispositif de communication sans fil est une fausse capacité du premier dispositif de communication sans fil ; et
la configuration d'au moins une ressource réseau comprend le fait d'éviter d'utiliser l'au moins une plage BW pour des communications futures avec le premier dispositif de communication sans fil.
